# EUROPÄISCHE PATENTSCHRIFT

(11) **EP 2 072 812 B1**
(45) Veröffentlichungstag und Bekanntmachung des Hinweises auf die Patenterteilung: **27.08.2014**
(21) Anmeldenummer: 08021598.1
(22) Anmeldetag: 12.12.2008
(51) Int. Cl.: B66C 1/62, F03D 1/06, F03D 1/00, B66C 1/10

(54) **Verfahren und Einrichtung zur Handhabung einer Rotornabe einer Windenergieanlage**
Method and attachment for handling a rotor hub of a wind turbine
Méthode et système d'attachement pour la manipulation d'un moyeu d'un rotor d'une éolienne

(30) Priorität: 20.12.2007 DE 102007062428
(43) Veröffentlichungstag der Anmeldung: 24.06.2009
(73) Patentinhaber: REpower Systems SE, 22297 Hamburg (DE)
(72) Erfinder: Trede, Alf, 25885 Immenstedt (DE); Heinecke, Oliver, 20251 Hamburg (DE); Eusterbarkey, Carsten, 25813 Simonsberg (DE)
(74) Vertreter: Seemann, Ralph

(56) Entgegenhaltungen:
- WO-A1-03/100249
- WO-A1-2008/132226
- DD-A1- 34 146
- DE-U1- 8 418 183
- JP-A- 2005 002 875

## Beschreibung

Die Erfindung betrifft ein Verfahren zum Handhaben einer Rotornabe einer Windenergieanlage oder zum Handhaben eines Rotors einer Windenergieanlage mittels einer Hebeeinrichtung, insbesondere beim Errichten einer Windenergieanlage oder bei der Montage oder Demontage eines Rotors einer Windenergieanlage an einer Windenergieanlage. Die Erfindung betrifft ferner eine Einrichtung zur Handhabung einer Rotornabe einer Windenergieanlage oder zur Handhabung eines Rotors einer Windenergieanlage, insbesondere bei Errichtung einer Windenergieanlage oder bei der Montage oder Demontage eines Rotors einer Windenergieanlage an einer Windenergieanlage. Des Weiteren betrifft die Erfindung eine Verwendung einer Kippeinrichtung zur Errichtung oder Demontage einer Windenergieanlage.

Um eine Windenergieanlage zu errichten, müssen zahlreiche Arbeitsschritte ausgeführt werden. Nachdem der Errichtungsort vorbereitet ist, werden verschiedene Elemente zum Errichtungsort der Windenergieanlage transportiert. Bei der Errichtung werden beispielsweise mehrere Turmabschnitte zu einem Turm zusammengebaut, anschließend wird eine Gondel mit einem Kran auf dem Turm aufgesetzt und an der Oberseite des Turmes angebracht. Anschließend wird der Rotor, bestehend aus einer Rotornabe und daran angeordneten Rotorblättern, zusammengebaut und anschließend unter Verwendung eines Krans sowie eines Hilfskrans an einer Rotorwelle an der Gondel angebracht. Alternativ hierzu wird zunächst die Rotornabe an der Rotorwelle angesetzt, so dass anschließend unter Zuhilfenahme von Kränen oder anderen Hilfsmitteln die Rotorblätter an den Flanschverbindungen des Rotors angebracht werden.

Derzeitige Windenergieanlagen der 5 bis 6 MW-Klasse weisen Rotoren mit beträchtlichen Durchmessern und Gewichten auf. Beispielsweise beträgt der Rotordurchmesser der Windenergieanlage der Anmelderin mit der Bezeichnung 5M ungefähr 126 m. Der Zusammenbau eines Rotors durch Anbringung von Rotorblättern an einer Rotornabe erfordert bei einem Zusammenbau am Boden eine große Fläche, die frei von Hindernissen sowie eben und stabil sein muss. Beispielsweise beträgt bei einem Rotordurchmesser von 100 m die dafür benötigte freie Montagefläche mehr als 5.000 m².

Außerdem erfordert das Anheben eines am Boden zusammen gebauten Rotors einen großen Aufwand, da der montierte Rotor nach Anheben in der Luft entsprechend gedreht werden muss. Beispielsweise werden bei der Montage eines Rotors für die 5M-Anlage der Patentanmelderin zwei Kräne sowie (passive) Hebemittel eingesetzt, die teilweise im äußeren Rotorblattbereich angreifen und nach der Rotormontage aufwendig entfernt werden müssen.

In WO-A-03/100249 ist ein Verfahren zur Handhabung von Windturbinenblättern und zur Anbringung der Blätter an einer Windturbine offenbart. Hierbei werden die folgenden Verfahrensschritte ausgeführt:
- Anheben einer Windturbinennabe an die Generatorgondel einer Windturbine mit einem Hubsystem und Anbringen der Nabe an der Generatorgondel
   oder Anheben der Windturbinennabe und der Generatorgondel als Einheit mit einem Hubsystem und Anbringen der Generatorgondel inkl. der Nabe an einem Windturbinenturm,
- Anheben mindestens eines Windturbinenblatts mit einem Hubsystem zum Handhaben von Windturbinenblättern,
- Anheben des mindestens einen Windturbinenblatts in eine vertikale Position und bis in enge Nähe zur Nabe und
- Anbringen des Windturbinenblatts an der Nabe.

In EP-B-2 118 483 sind ein Verfahren zum Bewegen eines Bestandteils einer Windkraftanlage sowie einer Nabe der Windkraftanlage sowie eine Handhabungseinrichtung zum Bewegen einer Nabe einer Windkraftanlage offenbart.

Weiterhin offenbart EP-A-2 154 366 ein Verfahren zum Anbringen eines Rotors einer Windenergieanlage. Hierbei wird eine Kippeinrichtung durch Anbringung eines ersten Drahts und eines zweiten Drahts an einem Rotor ausgebildet, wobei nach Anheben des Rotors mittels des ersten Drahts der erste Draht so verlängert wird, dass der Rotor mit dem zweiten Draht hochgezogen wird. Anschließend wird der Rotor, der mit dem zweiten Draht hochgezogen wird, an der Gondel der Windkraftanlage angeordnet.

Ausgehend von diesem Stand der Technik besteht die Aufgabe der vorliegenden Erfindung darin, die Montage bzw. die Errichtung sowie die Demontage einer Windenergieanlage auf einfache Weise zu verbessern, wobei der konstruktive Aufwand hierfür möglichst gering gehalten werden soll. Insbesondere soll der Aufwand zur Entfernung von Hebemitteln reduziert werden.

Gelöst wird diese Aufgabe durch ein Verfahren zum Handhaben einer Rotornabe einer Windenergieanlage oder zum Handhaben eines Rotors einer Windenergieanlage mittels einer Hebeeinrichtung, insbesondere beim Errichten einer Windenergieanlage oder bei der Montage oder Demontage eines Rotors einer Windenergieanlage an einer Windenergieanlage, wobei insbesondere eine Rotornabe oder ein Rotor mit einer Montageseite an einem Turm einer Windenergieanlage angeordnet wird oder ist, wobei die Rotornabe oder der Rotor mittels der Hebeeinrichtung angehoben oder gehalten wird, die Rotornabe im angehobenen Zustand mittels einer an der Rotornabe angreifenden Kippeinrichtung, wobei die Kippeinrichtung zwischen einem Hebemittel der Hebeeinrichtung und der Rotornabe angeordnet wird, aus der ursprünglichen angehobenen Lage um einen vorbestimmten Kippwinkel gekippt wird oder der Rotor mittels einer an der den Rotorblattwurzeln der Rotorblätter des Rotors angreifenden Kippeinrichtung, wobei die Kippeinrichtung zwischen einem Hebemittel der Hebeeinrichtung und dem Rotor angeordnet wird, aus der ursprünglichen angehobenen Lage um einen vorbestimmten Kippwinkel gekippt wird, wobei Führungsseile vorgesehen sind, um den Rotor oder die Rotornabe auszurichten und wobei die Führungsseile keine Verkippung des Rotors oder der Rotornabe bewirken.

Vorzugsweise wird das Verfahren ausgeführt beim Errichten einer Windenergieanlage, wobei eine Rotornabe oder ein Rotor mit einer Montageseite an einem Turm einer Windenergieanlage angeordnet wird, die Rotornabe oder der Rotor mit einer Hebeeinrichtung, insbesondere Kran, angehoben wird, nach dem Anheben die Rotornabe bzw. nach dem Anheben des Rotors im angehobenen Zustand mittels einer an der Rotornabe oder am Rotor angreifenden Kippeinrichtung aus der ursprünglichen angehobenen Lage um einen vorbestimmten Kippwinkel gekippt wird.

Die Erfindung beruht auf dem Gedanken, dass beispielsweise unter der Verwendung ausschließlich eines Krans als einzige Hebeeinrichtung eine an einem Turm bzw. an einer Gondel des Turmes zu montierende Rotornabe bzw. ein entsprechender Rotor mit Rotornabe angehoben werden und nach Anheben des Rotors bzw. der Rotornabe durch die Aktivierung einer zwischen dem Ausleger und der Rotornabe vorgesehenen Kippeinrichtung die Rotornabe bzw. der Rotor im hängenden Zustand um eine vorbestimmte Kippachse und insbesondere mit einem vorbestimmten Kippwinkel gedreht wird. Hierbei wird die Kippung der Rotornabe bzw. des Rotors unter Weglassung eines zweiten (Hilfs-)Krans ausgeführt.

Durch die durch die Kippeinrichtung ausgeführte Verkippung beispielsweise eines waagerecht ausgerichteten Rotors wird der gesamte Rotor im angehobenen Zustand durch Betätigung bzw. unter Einsatz der Kippeinrichtung in eine zur waagerechten Ausrichtung gekippten Stellung gebracht. Um den Rotor entsprechend auszurichten, sind Führungsseile vorgesehen, wobei diese Führungsseile keine Verkippung des Rotors bewirken. Dies erfolgt durch die Kippeinrichtung.

Um eine Kippung des Rotors bzw. der Rotornabe auszuführen, ist die Kippeinrichtung bei der Ausrichtung der an der Hebeeinrichtung bzw. an einem Anschlagpunkt angeordneten Rotornabe mit der Rotornabe und der Hebeeinrichtung, insbesondere des Auslegers bzw. des am Ausleger verlaufenden Hubseils, verbunden.

Darüber hinaus gestattet die steuerbare Kippeinrichtung auch eine positionsgenaue Kontrolle der Kipplage der Rotornabe bzw. des Rotors im an der Hebeeinrichtung hängenden Zustand. Weiterhin ist es durch die erfindungsgemäße Kippeinrichtung möglich, die Neigung eines Rotors bzw. einer Rotornabe im Verhältnis beispielsweise zu einer Rotorwellenebene einzustellen und einen Rotor entsprechend auszurichten. Dies erfolgt insbesondere auf eine ferngesteuerte Weise, so dass in der angehobenen (waagerechten) Ausgangsposition eines Rotors durch Aktivierung bzw. Betätigung der Kippeinrichtung um einen vorbestimmten Kippwinkel gekippt wird.

Durch den Einsatz bzw. die Verwendung der erfindungsgemäßen Kippeinrichtung wird es ferner ermöglicht, beispielsweise bei der Errichtung von Offshore-Windenergieanlagen einen Rotor an Land durch Anordnung von Rotorblättern an einer Rotornabe fertigzustellen und den fertiggestellten Rotor mittels eines Schwimmkörpers, beispielsweise einer Jack-up-Barge, zu dem Errichtungsort der Windenergieanlage zu transportieren. Am Errichtungsort werden die Beine der Jack-up-Barge ausgefahren, so dass der Schwimmkörper oberhalb des Gewässers ortsfest in eine stabile Arbeitsposition gebracht wird.

Durch die Verwendung (ausschließlich) eines einzigen Krans, der bevorzugt ebenfalls auf dem Schwimmkörper angeordnet ist, und unter Verwendung der erfindungsgemäßen Kippeinrichtung ist es möglich, den waagerecht liegenden Rotor vom Schwimmkörper mit dem Kran anzuheben und in der angehobenen Position aus der waagerechten Position in eine gekippte Position zu verkippen, so dass der Rotor mit der Montageseite an eine Gondel einer Windenergieanlage angesetzt und befestigt werden kann. Durch die Verwendung der Kippeinrichtung ist es nicht mehr erforderlich, andere Kräne oder Hilfskräne für die Errichtung bzw. für den Kippvorgang einzusetzen, wodurch insgesamt die Montage einer Windenergieanlage insbesondere offshore vereinfacht wird. Darüber hinaus ergeben sich erhebliche Zeitvorteile bei der Errichtung einer Windenergieanlage.

Durch eine positionsgesteuerte bzw. winkelgesteuerte Kippbewegung der Rotornabe bzw. des Rotors erfolgt eine genaue Steuerung bzw. Kontrolle, so dass bei der Montage der Neigungswinkel des Rotors auf einfache Weise verändert werden kann. Darüber hinaus wird durch den Einsatz der erfindungsgemäßen Kippeinrichtung ein weiteres Hebemittel, beispielsweise ein Hilfskran oder dergleichen, eingespart. Außerdem ist es auch nicht mehr erforderlich, weitere Hilfsmittel an einer empfindlichen Rotorblattoberfläche eines Rotors anzuschlagen, wie es derzeit im Stand der Technik erfolgt.

Im Rahmen der Erfindung ist es selbstverständlich, dass die Kippvorgänge reversibel sind, so dass die erfindungswesentlichen Verfahrensschritte des Kippvorgangs bei der Montage einer Windenergieanlage bei Befestigung eines Rotors an einer Gondel bzw. einer Rotorwelle bei einer Demontage der Anlage umkehrbar sind, so dass bei einer Zerlegung einer installierten Anlage der Rotor nach dem Abnehmen von der Gondel oder der Rotorwelle mittels der Hebeeinrichtung gehalten wird und mittels der Kippeinrichtung aus der aufgerichteten Position in eine waagerechte Position durch Verkippung des Rotor an der Hebeeinrichtung bzw. am Kran gebracht werden kann. Wenn nachfolgend die Montage einer Windenergieanlage beschrieben ist, so ist im Rahmen der Erfindung und der Offenbarung selbstverständlich, dass auch die reversibel ausführbaren Schritte zur Demontage einer Anlage in entsprechender Weite mitgelesen werden.

In einer Weiterbildung des Verfahrens wird vorgeschlagen, dass nach dem Anheben die gekippte Rotornabe mit ihrer Montageseite oder der gekippte Rotor mit seiner Montageseite an eine Rotornabenmontageseite des Turms oder an eine auf dem Turm angeordneten Gondel angesetzt wird. Wenn im vorliegenden Zusammenhang davon die Rede ist, dass ein Rotor oder eine Rotornabe an einem Turm einer Windenergieanlage montiert werden, so ist im Rahmen der Offenbarung damit ebenfalls umfasst, dass der Rotor oder die Rotornabe auch an einem entsprechenden Maschinenhaus oder einer Gondel auf einem Turm angeordnet werden. Dies gilt in entsprechender Weise ebenfalls für eine Demontage der Windenergieanlage.

Der Kippvorgang eines Rotors oder der Rotornabe wird dann eingeleitet, wenn die als Aktivmittel ausgebildete Kippeinrichtung am Hebemittel der Hebeeinrichtung zur Einleitung des Kippvorgangs aktiviert oder geschaltet wird. Beispielsweise kann die Kippeinrichtung eine Hydraulik oder einen Antrieb oder dergleichen aufweisen, die zur Ausführung der Kippung betätigt wird.

Überdies ist es von Vorteil, wenn die Rotornabe mit wenigstens einem daran angeordneten Rotorblatt mittels der Kippeinrichtung verkippt wird. Hierbei werden insbesondere das Rotorblatt bzw. die Rotorblätter mit der Rotornabe über entsprechende Flanschverbindungen miteinander verbunden, wobei die Montage des Rotors aus Rotornabe und Rotorblättern auf einer ebenen Fläche erfolgt, so dass der fertiggestellte Rotor nach der Montage in einer waagerechten Position angeordnet ist. Dabei ist die erfindungsgemäße Kippeinrichtung, die in einer Ausführungsform an der Rotornabe angesetzt wird, derart ausgelegt, dass auch Rotoren mit einem Gewicht von über 80 t, insbesondere über 100 t, im angehobenen Zustand gekippt werden.

Darüber hinaus ist es günstig, wenn die Rotornabe oder die Rotornabe mit wenigstens einem daran angeordneten Rotorblatt (Rotor) in eine Montagebereitstellung gekippt werden. Nach dem Kippvorgang können somit die Rotornabe oder der Rotor mit der Hebeeinrichtung, beispielsweise einem Kran, an den Turm oder die Gondel, an der die Rotornabe befestigt werden soll, angenähert werden, um eine Endmontage des Rotors bzw. der Rotornabe dort auszuführen.

Insbesondere wird der Rotor bzw. die Rotornabe mit wenigstens einem daran angeordneten Rotorblatt mittels der Kippeinrichtung verkippt.

Zur Montage einer Windenergieanlage werden ferner der Rotor bzw. die Rotornabe mit wenigstens einem darin angeordneten Rotorblatt an dem Turm bzw. an einer Gondel des Turms angebracht. Bei einer Demontage der Windenenergieanlage wird die Rotornabe oder der Rotor von dem Turm oder von der Gondel demontiert bzw. abgenommen und anschließend mittels der Kippeinrichtung verkippt.

Überdies ist es in einer Ausgestaltung vorteilhaft, wenn vor dem Anheben der Rotornabe die Kippeinrichtung mit der Rotornabe verbunden wird oder vor dem Anheben des Rotors die Kippeinrichtung mit dem Rotor verbunden wird. Hierbei befindet sich vorteilhafterweise die Rotornabe oder der Rotor in einem montagebereiten Zustand, so dass zur Ausführung der Montage die Kippeinrichtung an der Rotornabe angebracht wird.

Bevorzugterweise wird die Kippeinrichtung zwischen einem Hebemittel der Hebeeinrichtung und der Rotornabe angeordnet oder die Kippeinrichtung zwischen einem Hebemittel der Hebeeinrichtung und dem Rotor angeordnet. Hierbei weist die Kippeinrichtung einen Anschlagpunkt auf, an dem das Hebemittel oder die Hebeeinrichtung angeschlagen wird. Dadurch wird unter Zwischenschaltung der Kippeinrichtung zwischen einem Ausleger oder dem Hebemittel beispielsweise eines Krans und der Rotornabe bzw. dem Rotor oder zwischen einem Hubseil der Hebeeinrichtung, z.B. Kran, und der Rotornabe bzw. Rotor die Kippeinrichtung ausgebildet, wobei die Kippeinrichtung bei der Montage passiviert ist. Erst nach Anheben der Rotornabe bzw. des Rotors wird durch Aktivierung oder Betätigung oder Schalten der Kippeinrichtung ein Kippvorgang des an einem Hebemittel eines Krans hängenden oder an einem Anschlagpunkt eines Hebemittels angeordneten Rotors im freien Raum bzw. im hängenden Zustand ausgeführt.

Bevorzugt erfolgt der Kippvorgang mittels der frei im Raum an einem Hubseil der Hebeeinrichtung hängenden Kippeinrichtung, wobei der Rotor gegebenenfalls durch Hilfsseile gegen einfallende Windböen stabilisiert wird.

Darüber hinaus zeichnet sich das Montageverfahren dadurch aus, dass die Rotornabe oder der Rotor unter Verwendung bzw. Einsatz eines Krans als Hebeeinrichtung angehoben wird oder ist. Hierbei ist insbesondere der Kran neben der zu errichtenden Windenergieanlage aufgebaut bzw. platziert, wobei weiter vorteilhafterweise der Kran als selbständige Einheit nicht mit der Windenergieanlage verbunden ist oder daran angeordnet ist.

Nach der Montage des Rotors an der Gondel des Rohrturms wird der Kran nach seinem Einsatz von der Errichtungsstelle zu einer anderen Errichtungsstelle transportiert oder bewegt.

Außerdem wird die Aufgabe gelöst durch eine Einrichtung zur Handhabung einer Rotornabe einer Windenergieanlage oder zur Handhabung eines Rotors einer Windenergieanlage, insbesondere bei Errichtung einer Windenergieanlage oder bei der Montage oder Demontage eines Rotors einer Windenergieanlage an einer Windenergieanlage, wobei die Einrichtung als Kippeinrichtung ausgebildet ist, die Kippeinrichtung Befestigungsmittel aufweist, mit denen die Kippeinrichtung an der Rotornabe und/oder an den Rotorblattwurzeln der an der Rotornabe angeordneten Rotorblätter des Rotors befestigt wird oder ist, wobei die Kippeinrichtung einen Anschlagpunkt für ein Hebemittel, insbesondere einer Hebeeinrichtung, aufweist, wobei im angehobenen Zustand der Rotornabe am Hebemittel beim Verkippen der Rotornabe mittels der am Hebemittel angeordneten Kippeinrichtung die Position der Rotornabe verändert wird oder im angehobenen Zustand des Rotors am Hebemittel beim Verkippen des Rotors mittels der am Hebemittel angeordneten Kippeinrichtung die Position der Rotornabe verändert wird, wobei Führungsseile vorgesehen sind, um den Rotor oder die Rotornabe auszurichten und wobei die Führungsseile keine Verkippung des Rotors oder der Rotornabe bewirken.

Hierbei wird ein Hebemittel einer Hebeeinrichtung, z.B. ein Ausleger oder ein Hubseil eines Krans, an einem Anschlagpunkt der Kippeinrichtung angeordnet, wobei die Kippeinrichtung mit Befestigungsmitteln versehen ist, so dass die Kippeinrichtung an eine Rotornabe oder einen Rotor befestigt wird oder ist, und die Kippeinrichtung derart ausgebildet ist, dass die an der Kippeinrichtung angeordnete Rotornabe bzw. der daran angeordnete Rotor im angehobenen Zustand aus der ursprünglichen angehobenen Lage in eine gekippte Position mit einem vorbestimmten Kippwinkel durch Betätigung oder Aktivierung der Kippeinrichtung gebracht wird.

Beispielsweise verfügt eine Hebeeinrichtung über einen Ausleger und/oder ein über einen Ausleger verlaufendes Hubseil bzw. über ein, vorzugsweise an einem Ausleger angeordnetes, Hebemittel, an dem die erfindungsgemäße Kippeinrichtung an einem Anschlagpunkt befestigt wird. Als Anschlagpunkt der Kippeinrichtung wird im Rahmen der Offenbarung ein Kraftangriffspunkt für das daran angeordnete Hebemittel verstanden. Hierbei ist die Kippeinrichtung mittels einer lösbaren Verbindung an dem Anschlagpunkt angeschlagen.

Im Rahmen der Offenbarung der Erfindung wird außerdem unter einer Hebeeinrichtung, die mit einer erfindungsgemäßen Kippeinrichtung ausgestattet bzw. verbunden wird oder ist, neben einem Kran auch ein Seil oder eine Hubplattform, beispielsweise in Form einer Jack-up-Barge oder dergleichen, verstanden.

Bei Einsatz der Kippeinrichtung ist in einer Ausgestaltung vorgesehen, dass der Abstand des, insbesondere während des Verkippens ortsfesten, Anschlagpunktes zum Schwerpunkt der Rotornabe beim Verkippen der Rotornabe oder der Abstand des Anschlagpunktes zum Schwerpunkt des Rotors beim Verkippen des Rotors bzw. während des Kippvorgangs im Wesentlichen konstant bleibt. Hierbei wird vornehmlich die Rotornabe bzw. der Rotor im (jeweiligen) Schwerpunkt verkippt, wobei die bevorzugte Kippachse beim Verkippen der Rotornabe bzw. des Rotors im Wesentlichen horizontal verlaufend ausgebildet ist.

Gemäß einer alternativen Weiterbildung der Kippeinrichtung wird der Abstand des, insbesondere beim Verkippen ortsfesten, Anschlagpunktes zum Schwerpunkt der Rotornabe beim Verkippen der Rotornabe oder der Abstand des Anschlagpunktes zum Schwerpunkt des Rotors beim Verkippen des Rotors bzw. während des Kippvorgangs je nach Ausgestaltung der Kippeinrichtung verändert, insbesondere vergrößert oder verkleinert. Dabei kann die, insbesondere horizontal verlaufende, Kippachse, um die der Verkippvorgang des Rotors oder der Rotornabe ausgeführt wird, außerhalb des Schwerpunkts der Rotornabe bzw. des Rotors liegen, wobei die Kippachse in Abhängigkeit der Kippstellung der Rotornabe oder des Rotors ihre Lage verändern kann, d.h. wandert, wobei insbesondere die bevorzugte horizontale Ausrichtung der Kippachse unverändert bleibt.

Um eine Verkippung oder eine Verschränkung des Rotors oder der Rotornabe im angehobenen Zustand sicher auszuführen, ist weiterhin in einer Ausgestaltung vorgesehen, dass das Befestigungsmittel der Kippeinrichtung als Rahmen, insbesondere Anbaurahmen, oder als Gestell oder als Befestigungsbügel oder als Adapter ausgebildet ist. Hierdurch wird der Rotor oder die Rotornabe lösbar mit der Kippeinrichtung gut verbunden, um eine Verkippung anschließend auszuführen.

Dazu ist weiter vorgesehen, dass am Befestigungsmittel der Kippeinrichtung ein Tragbügel oder ein Hebearm oder ein Schwenkbügel, insbesondere Schwenkrahmen, oder Schwenkgestell oder eine, insbesondere gekrümmte, Führungsschiene, vorzugsweise Traverse, angeordnet oder vorgesehen ist, so dass unter Verwendung von diesen genannten Einrichtungen und insbesondere weiter in Kombination bzw. unter Einsatz eines Antriebs oder Aktors die angehobene Rotornabe bzw. der angehobene Rotor verkippt werden.

Weiterhin kann die Kippeinrichtung auch einen Hebearm und/oder einen Hebelarm aufweisen, wobei für die Verkippung von Rotor oder Rotornabe der Hebearm oder der Hebelarm beweglich oder bewegbar an der Rotornabe oder an einem an der Rotornabe vorgesehenen Befestigungsbauteil bzw. -mittel der Kippeinrichtung angeordnet sind oder werden.

Außerdem ist es günstig in einer Ausgestaltung der Kippeinrichtung, wenn die Kippeinrichtung einen Antrieb und/oder einen Aktor aufweist. Vorzugsweise ist der Aktor als Hubzylinder, insbesondere Teleskopzylinder, oder als Seilwinde oder als Seilzug, insbesondere mit Seilverkürzung/Seilverlängerung, oder als rotatorischer Antrieb, insbesondere mit einem Antriebsritzel, ausgebildet.

Überdies ist in einer Weiterbildung der Einrichtung der Antrieb im Eingriff mit der Führungsschiene, um durch Betätigung des Antriebs bzw. des Motors die Verkippung der Rotornabe bzw. des Rotors mittels der Kippeinrichtung einzuleiten bzw. den Kippvorgang gezielt von außen zu beeinflussen bzw. zu steuern.

Um eine exakte Bewegungsführung bei dem Kippvorgang auszuführen, ist es ferner bevorzugt, wenn die Führungsschiene, in die ein Antrieb(smotor) eingreift, mit einem Zahnkranz oder mit einem Bolzenkranz oder einer Rollenkette ausgebildet ist.

Eine einfache Ausbildung und Handhabung der Kippeinrichtung ergibt sich dadurch, dass der Antrieb am Hebemittel der Hebeeinrichtung oder Anschlagpunkt oder an der Führungsschiene angeordnet ist oder wird.

Darüber hinaus wird die Aufgabe der Erfindung gelöst durch eine Verwendung einer Kippeinrichtung zur Errichtung oder Demontage einer Windenergieanlage, wobei die Kippeinrichtung wie voranstehend beschrieben ausgebildet ist, insbesondere unter Verwendung einer Hebeeinrichtung.

Durch die Verwendung einer Kippeinrichtung bei oder zur Errichtung oder Demontage einer Windenergieanlage ist es möglich, dass mittels einer Hebeeinrichtung eine Rotornabe oder ein Rotor angehoben wird oder ist, und insbesondere die Rotornabe oder der Rotor an einem Turm einer Windenergieanlage angeordnet wird oder ist, wobei die Kippeinrichtung zwischen dem Hebemittel beispielsweise an einem Ausleger der Hebeeinrichtung oder einem Hubseil der Hebeeinrichtung und der Rotornabe bzw. dem Rotor angeordnet wird, so dass die Rotornabe oder der Rotor mittels der Kippeinrichtung um einen vorbestimmten Kippwinkel aus der ursprünglichen angehobenen Lage durch oder nach Betätigung oder Aktivierung der Kippeinrichtung gekippt wird oder ist.

Weitere vorteilhafte Ausgestaltungen der erfindungsgemäßen Kippeinrichtung sind voranstehend ausführlich beschrieben, so dass auf die obigen Ausführungen ausdrücklich verwiesen wird. Im Rahmen der Offenbarung ist auch eine Kombination einer Hebeeinrichtung, beispielsweise in Gestalt eines Hebekrans, einer Hubplattform, z.B. Jack-up-Barge oder dergleichen, mit einer erfindungsgemäßen Kippeinrichtung beschrieben.

Im erfindungsgemäßen Sinne wird die Kippeinrichtung temporär zur Montage oder Demontage von Bauteilen einer Windenergieanlage eingesetzt, wobei insbesondere die Bauteile, z.B. Rotoren oder Rotornaben, in eine montagebereite Position gebracht werden, nachdem die Bauteile sich in der angehobenen Position befinden und durch Betätigung der Kippeinrichtung in eine gekippte Stellung gebracht werden, wobei es erfindungsgemäß nicht mehr erforderlich ist, andere Hebemittel zu verwenden, um einen Rotor oder ein entsprechendes Bauteil in eine montagebereite Position mit einem vorbestimmten Neigungswinkel oder Kippwinkel zu bringen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1 a, Fig. 1b: eine Querschnittsdarstellung eines an einem Kran hängenden Rotors in einer im Wesentlichen waagerechten Lage und in einer gekippten Montageposition;
- Fig. 2a, Fig. 2b: schematisch in einer Seitenansicht jeweils weitere Ausführungsformen eines an einem Kran hängenden Rotors;
- Fig. 3: in einer schematischen Teilansicht einen Bestandteil einer erfindungsgemäßen Kippeinrichtung;
- Fig. 4a, Fig. 4b: eine Seitenansicht bzw. Draufsicht auf einen Rotor;
- Fig. 5a, Fig.5b: eine Seitenansicht und eine Draufsicht auf einen Rotor und
- Fig. 6a, Fig. 6b: eine Seitenansicht und eine Draufsicht auf einen Rotor und
- Fig. 7: eine schematische, perspektivische Darstellung einer Rotornabe mit einer Kippeinrichtung.

In den folgenden Figuren sind jeweils gleiche oder gleichartige Elemente bzw. entsprechende Teile mit denselben Bezugsziffern versehen, so dass von einer entsprechenden erneuten Vorstellung abgesehen wird.

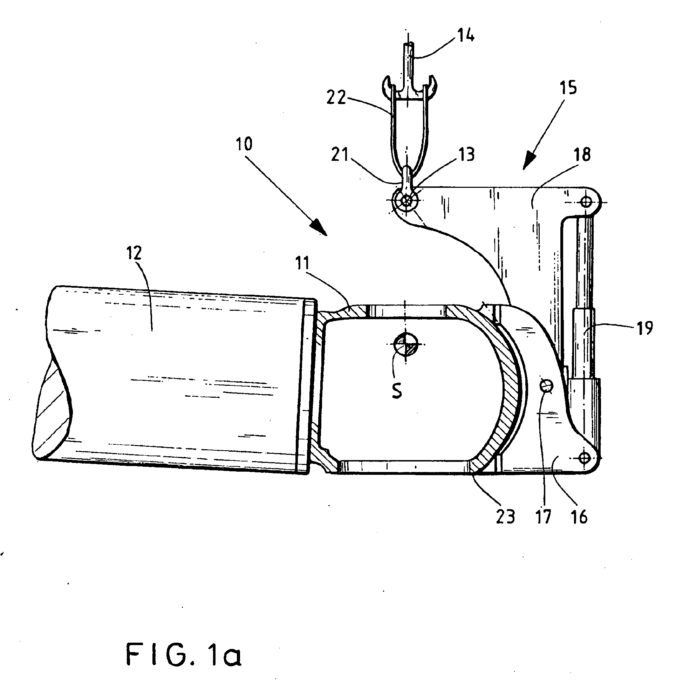

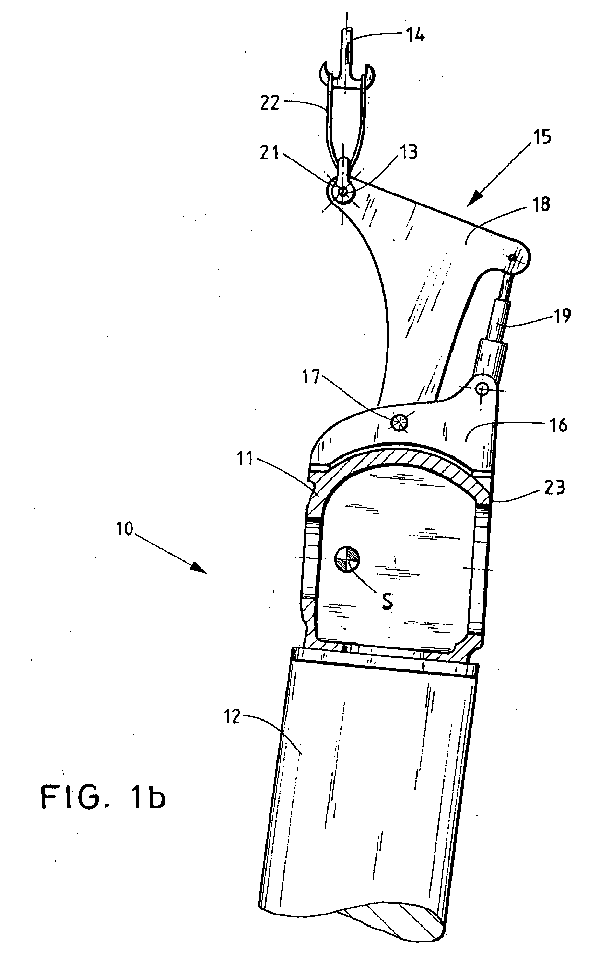

Fig. 1 a zeigt schematisch in einer Seitenansicht einen Rotor 10 einer Windenergieanlage im angehobenen Zustand, wobei der Rotor 10, mit einer Rotornabe 11, die im Querschnitt schematisch dargestellt ist, und einem an der Rotornabe 11 angeordneten Rotorblatt 12 ausgebildet ist.

Insbesondere sind an der Rotornabe 11 mehrere, vorzugsweise drei, Rotorblätter 12 gleichmäßig angeordnet und mit Flanschverbindungen mit der Rotornabe 11 verbunden. Aus Gründen der besseren Darstellbarkeit wurde von der Einzeichnung weiterer Rotorblätter abgesehen.

Der Rotor 10 wurde im waagerechten Zustand auf einer freien ebenen Fläche montiert. Dies kann beispielsweise am Errichtungsort einer Windenergieanlage erfolgen. Werden die Windenergieanlagen offshore errichtet, ist es beispielsweise möglich, dass die Rotoren 10 an Land im waagerechten Zustand gefertigt werden und anschließend mittels eines Schwimmkörpers zum Errichtungsort transportiert werden. Am Errichtungsort selbst werden die Rotoren 10 aus der ursprünglichen waagerechten Position mittels eines Krans, der über einen Ausleger und ein Hubseil verfügt, angehoben, so dass der Rotor 10 in einer im Wesentlichen waagerechten Position an einem Haken 14 oder einer Hakenflasche oder dergleichen hängt. Typischerweise haben die zu installierenden Rotoren einer Windenergieanlage der 5 bis 6 Megawatt-Klasse ein Gewicht von 120 Tonnen und mehr.

Als Kräne bzw. Hebeeinrichtungen werden beispielsweise Kräne verwendet, wie sie in DE 100 28 513 A1 beschrieben sind. Auf dieses Dokument wird im Hinblick auf weitere Details zu Kränen ausdrücklich hingewiesen. In DE 100 28 513 A1 sind ein Verfahren und eine Vorrichtung zur Montage einer Windkraftanlage unter Verwendung von Kränen offenbart.

Erfindungsgemäß ist zwischen der Rotornabe 11 und dem Haken 14 eine Kippeinrichtung 15 ausgebildet, die vor Anheben des Rotors 10 an der Rotornabe 11 fixiert wird. Hierbei weisen sowohl die Rotornabe 11 als auch die Kippeinrichtung 15 entsprechende Fixierungsmittel bzw. Befestigungseinrichtungen auf.

Die Kippeinrichtung 15 verfügt über einen Befestigungsadapter 16, der lösbar fest mit dem Rotor 10 bzw. der Rotornabe 11 verbunden wird. Hierzu sind beispielsweise Schraubverbindungen zwischen dem Befestigungsadapter 16 und der Rotornabe 11 vorgesehen. Beispielsweise kann der Befestigungsadapter 16 als Ausbaurahmen mit entsprechenden Befestigungsmitteln ausgebildet sein.

Darüber hinaus verfügt die Kippeinrichtung 15 über einen verschwenkbaren Hebelarm 18, der mittels eines Bolzens 17 schwenkbar am Befestigungsadapter 16 oder eine Basis angeordnet ist. Hierbei ist der Hebelarm 18 um den Bolzen 17 sowie um eine kollinear zum Bolzen 17 ausgebildete Schwenkachse verschwenkbar bzw. verkippbar. Auf der rückwärtigen Seite der Kippeinrichtung 15 ist ein verschwenkbarer Hydraulikzylinder 19 bzw. Teleskopzylinder zwischen dem einen Ende des Befestigungsadapters 16 und dem oberen Kopfende des Hebelarms 18 angeordnet.

Der Hebelarm 18 weist an dem dem Haken 14 zugewandten Ende eine kopfartige Verbreiterung oberhalb des Schwerpunkts S auf, wobei das eine Ende der kopfartigen Verbreiterung über einen Schäkel 21 und ein Seil 22 mit dem Haken 14 verbunden ist. An dem dem Schäkel 21 gegenüberliegenden Ende des Hebelarms 18 ist der Hydraulikzylinder 19 mit dem Hebelarm 18 verbunden. Der Hebelarm 18 ist mittels eines Bolzens oder dergleichen am Anschlagpunkt 13 am Sockel 21, der Bestandteil eines Hebemittels eines Krans oder einer anderen Hebeeinrichtung ist, angeschlagen.

Fig. 1a zeigt den Hydraulikzylinder 19 in einer ausgefahrenen Position, so dass der Schäkel 21 bei waagerechter Anordnung des Rotors 10 oberhalb des schematisch eingezeichneten Schwerpunktes S des Rotors 10 angeordnet ist. Im ausgefahrenen Zustand des Hydraulikzylinders 19 wird der Rotor 10 in seiner im Wesentlichen horizontalen Lage angehoben.

In einer entsprechenden Höhe wird die Hydraulik bzw. Steuerung für den Hydraulikzylinder 19 bzw. die Kippeinrichtung aktiviert, so dass der Rotor 10 durch Zurückfahren des Hydraulikzylinders 19 bei gleichzeitiger Verkippung des Rotors 10 in eine entsprechend gekippte Lage bei freihängendem Zustand des Rotors 10 am Haken 14 des eingesetzten Krans gebracht wird.

Fig. 1b zeigt den Rotor 10 in einer entsprechend gekippten aufrecht ausgerichteten Position, so dass beispielsweise der Rotor 10 mit seiner Rotornabe 11 an eine entsprechende Rotorwelle an einer Gondel angehoben wird und dort mittels des verwendeten Krans ausgerichtet und anschließend mit seiner Rückseite an einer Gondel oder am Turm befestigt wird. Hierbei wird beispielsweise die Rückseite 23 der Rotornabe 11 an einen entsprechenden Flansch angeflanscht.

In einer Alternative ist anstelle des Hebelarms 18 ein Schwenkrahmen oder dergleichen am Befestigungsadapter 16 angeordnet.

Im Rahmen der Erfindung ist es möglich, dass bei Verwendung derselben Elemente einer Kippeinrichtung 15 eine Kippeinrichtung zur Montage einer Windenergieanlage sich in der Anordnung der Elemente von einer Kippeinrichtung zur Demontage der Windenergieanlage unterscheidet, um eine einfache Handhabung der Kippeinrichtung zu erreichen.

Die Verkippung bzw. die Verschwenkung des Rotors 10 in der angehobenen Position erfolgt ausschließlich durch die Betätigung der Kippeinrichtung 15, so dass durch Ausführung einer Kippbewegung mittels der Kippeinrichtung 15 der Rotor 10 in eine montagebereite Position zur Montage an einem Turm gebracht wird bzw. ausgerichtet wird.

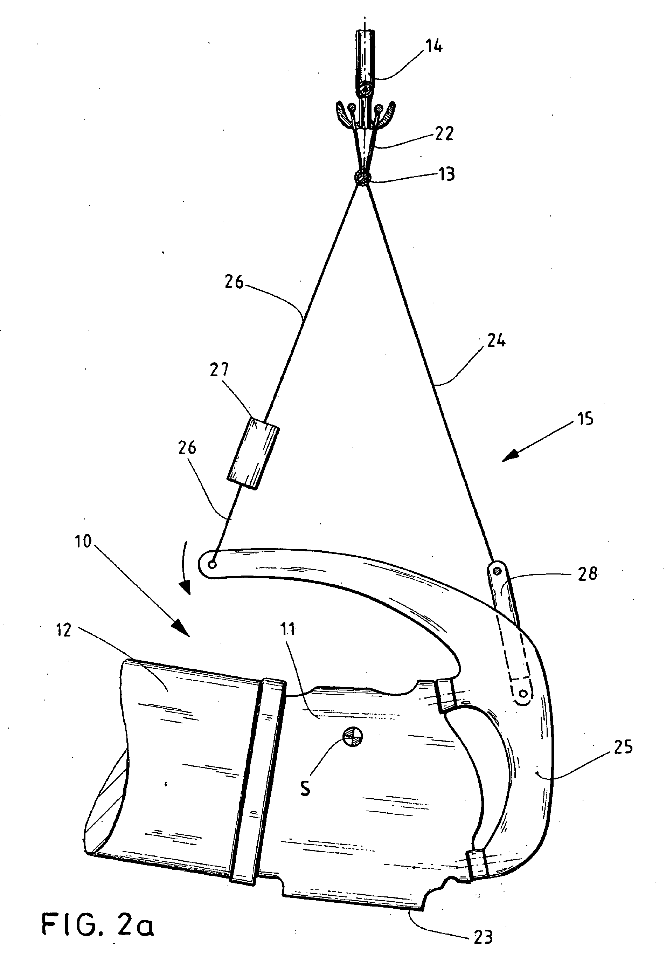

Fig. 2a zeigt ein weiteres Ausführungsbeispiel mit einer anderen Kippeinrichtung 15. Hierbei befindet sich der Rotor 10 im angehobenen Zustand, wobei der Rotor 10 im Wesentlichen horizontal ausgerichtet ist. An einer entsprechenden Seite der Rotornabe 11 ist ein gekrümmter Hebearm 25 auf der Vorderseite der Rotornabe 11 und im Bereich der Rückseite 23 der Rotornabe 11 mit der Rotornabe 11 lösbar verbunden.

Der Hebearm 25 ist mit einer Krümmung ausgebildet, wobei am Ende des Hebearms 25, der dem Haken 14 zugewandt ist oder wird, bzw. dem oberen Ende des Hebearms 25 ein Seil 26 angelenkt und am Anschlagpunkt 13 des Hebemittels angeschlagen ist. Das Seil 26 verläuft vom oberen Anschlagpunkt des Hebearms 25 unter Zwischenschaltung eines Verstellelements 27 zum Anschlagpunkt 13 am Haken 14, der am (nicht dargestellten) Kran bzw. an einem nicht gezeigten Kranauslegerarm angeordnet ist. Ferner ist am Anschlagpunkt 13 ein zweites Seil 24 angeschlagen, das eine konstante Länge aufweist, und mit einem beweglich am Hebearm 25 angeordneten Arm 28, der gegenüber dem oberen Ende des Hebearms 25 angeordnet ist, verbunden ist.

Durch das Verstellelement 27, das beispielsweise als Winde oder Kettenzug oder Spindel oder auch als hydraulischer Zylinder ausgebildet ist, wird die Länge des Seils 26 verlängert, dass der Rotor 10 dadurch in eine Kipplage gebracht wird, wobei der Rotor 10 in eine aufgerichtete, vorzugsweise zur Montage bereite, Position gekippt wird. Anschließend wird der Rotor 10 mit seiner Rückseite 23 an einer Gondel angesetzt bzw. angeflanscht. Nach der Montage des Rotors 10 wird der Hebearm 25 sowie das Seil 26, das Verstellelement 27 zusammen mit dem beweglichen Arm 28 vom Rotor 10 demontiert.

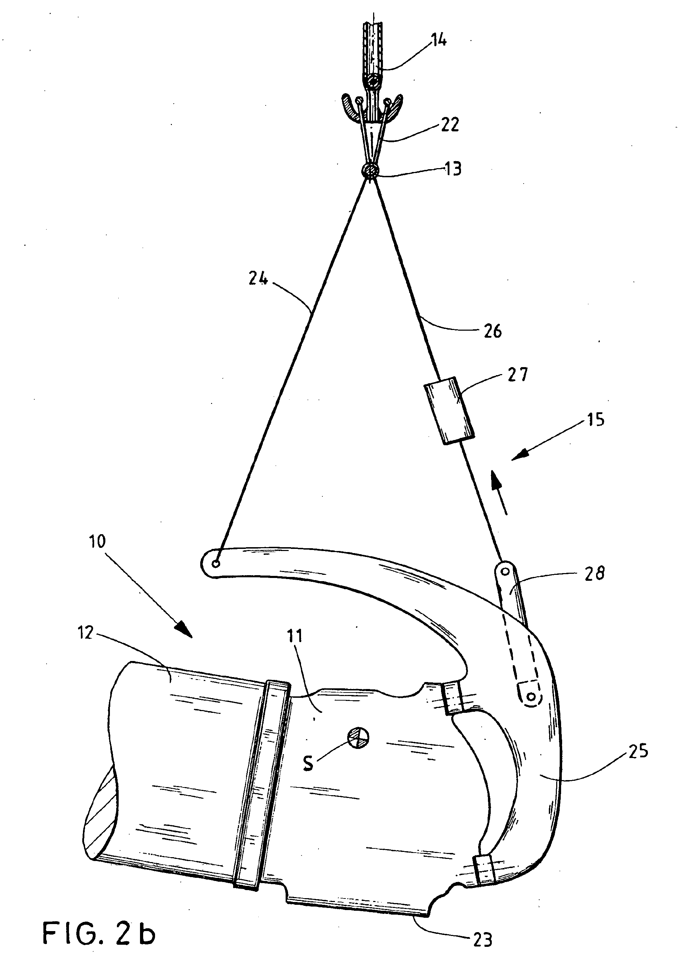

Bei dem in Fig. 2b gezeigten Ausführungsbeispiel einer Kippeinrichtung sind die Seile 24, 26 gegenüber dem in Fig. 2a gezeigten Ausführungsbeispiel vertauscht. Entsprechend wurde auch das Verstellelement 27, beispielsweise eine Seilwinde, ebenfalls auf der anderen Seite angeordnet. Um eine Verkippung des Rotors 10 auszuführen, wird bei dem in Fig. 2b dargestellten Ausführungsbeispiel die Länge des Seils 26 mittels des Verstellelements 27 verkürzt. Hierbei wird ebenfalls der Abstand zwischen dem Anschlagpunkt 13 und dem Schwerpunkt S des Rotors 10 verkürzt. Bei dem in Fig. 2a gezeigten Ausführungsbeispiel wird beim Verkippen des Rotors 10 durch Verlängerung der Seillänge des Seils 26 der Abstand zwischen dem Anschlagpunkt 13 und dem Schwerpunkt S vergrößert.

Eine Verkippung mit Vergrößerung des Schwerpunktabstands zum Anschlagpunkt erfordert vorteilhaft keine externe Antriebsenergie, z.B. kann Öl in einem Hydraulikzylinder über ein Hydraulikventil und eine Blende in einen drucklosen Tank abgelassen werden. Wird der Schwerpunktabstand bei der Verkippung in gezeigter Anordnung reduziert, erfordert dieses eine Antriebsenergie, die beispielsweise durch einen Verbrennungsmotor, Akkumulatoren oder in einem hydraulischen Druckspeicher zur Verfügung gestellt werden kann.

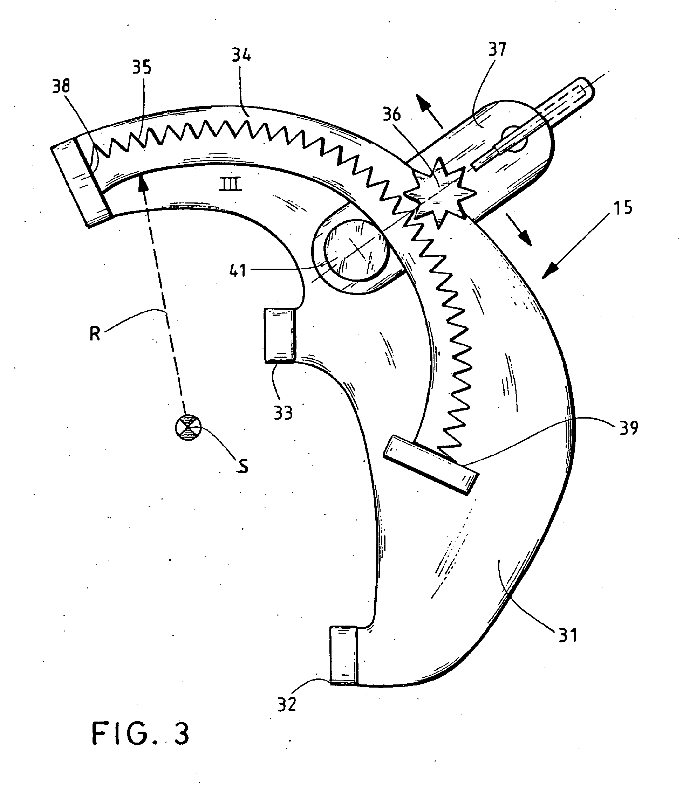

Fig. 3 zeigt eine schematische Seitenansicht eines brückenartigen oder wangenartigen Bauteils 31 als Bestandteil einer weiteren erfindungsgemäßen Kippeinrichtung 15. Das Bauteil 31 verfügt über Anschlüsse 32, 33, mittels derer das Bauteil 31 an eine Rotornabe eines Rotors angeordnet wird. Hierbei ist die Kontaktstelle des Anschlusses 32 im rückseitigen Bereich und der Anschluss 33 im vorderseitigen Bereich der Rotornabe befestigt.

Das Bauteil 31 verfügt über eine armförmige gekrümmte Verlängerung 34, die im Inneren ein gebogenes kreisförmiges Zahnkranzsegment 35 aufweist. Das Zahnkranzsegment 35 ist derart gebogen, dass der Abstand bzw. der Radius R zu der Innenseite des Zahnkranzsegments 35 bezogen auf den Rotorschwerpunkt S konstant ist. Die Zähne des Zahnkranzsegments 35 befinden sich in Eingriff mit einem Antriebsritzel 36 eines Anschlussbauteils 37. Um das Anschlussteil 38 exakt auf das bzw. entlang des Zahnkranzsegments 35 zu führen bzw. zu bewegen, weist das Anschlussteil 38 ein Gegenlager in Form einer Tragrolle 41 auf, die auf der kreisbogenförmigen bzw. gekrümmten Innenseite des Zahnkranzsegments 35 abrollt, so dass zwischen der Tragrolle 41 und dem Antriebsritzel 36 das Zahnkranzsegment 35 angeordnet ist.

Das Antriebsritzel 36 wird mittels eines Antriebs in Rotation versetzt, so dass durch die Rotation des Antriebsritzels 36 das Anschlussbauteil 37 auf einer Kreisbogenbahn verfahren wird, wobei die Tragrolle 41 zur Übertragung der Hubkraft auf der kreisförmigen Innenseite des Zahnkranzsegments 35 abrollt. Beim Verkippen bzw. Verschwenken bleibt der Abstand zwischen dem Anschlagpunkt des Hebemittels und dem Schwerpunkt des Rotors der Rotornabe im Wesentlichen konstant. Das Anschlussteil 37 ist auf per se bekannte Weise mit einem Hebemittel in Form eines Hubseil bzw. einem Lasthaken eines Krans in einem Anschlagpunkt verbunden, wenn das Bauteil 31 an eine Rotornabe angebaut wird oder nachdem es angebaut worden ist.

Befindet sich eine hochzuhebende und zu verkippende Rotornabe mit ihrer Rückseite auf einem Boden, so wird das Anschlussteil 37 im Bereich des linken Anschlags 38 des Zahnkranzsegments 35 angeordnet. Soll die Rotornabe bzw. der Rotor im hängenden Zustand verkippt bzw. gedreht werden, so wird das Anschlussteil 37 durch Bewegung des Antriebsritzels 36 in Richtung des zweiten Anschlags 39 bewegt, bis die Rotornabe bzw. der Rotor einen vorbestimmten Kippwinkel einnehmen.

Als Antriebe für das Antriebsritzel 36 ist es beispielsweise möglich, dass hierfür elektrische oder hydraulische Antriebe oder auch elektrische Getriebemotoren vorgesehen sind.

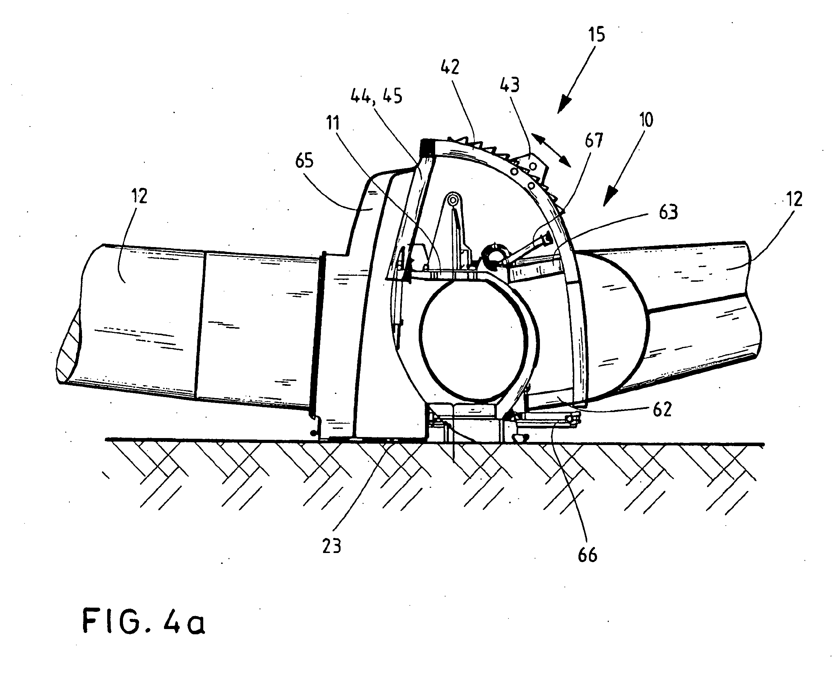

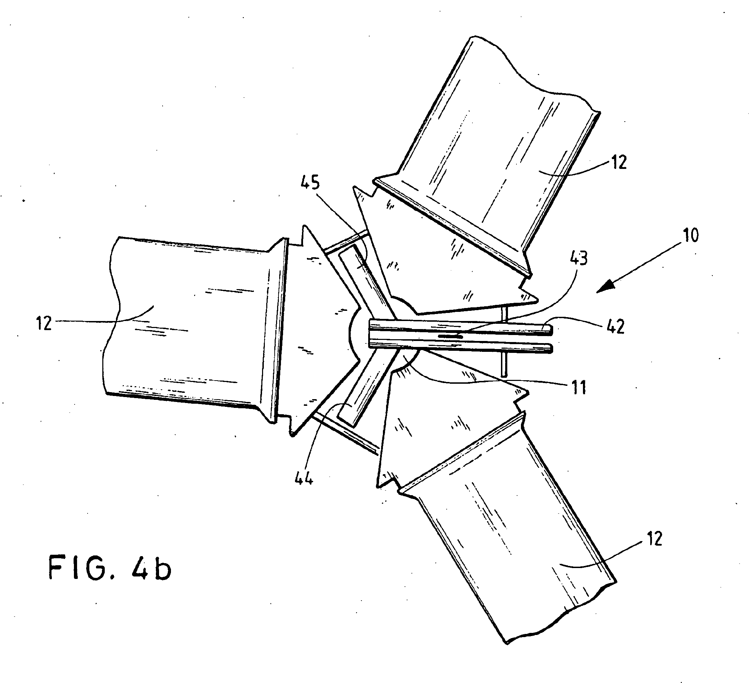

In Fig. 4a und 4b sind eine Querschnittsdarstellung sowie eine Draufsicht auf einen Rotor 10 dargestellt, wobei zur Darstellung erfindungswesentlicher Elemente von der Darstellung anderer Bauteile des Rotors 10 abgesehen worden ist. Um den Rotor 10 im angehobenen Zustand zu verkippen, wird vor dem Anhebevorgang die Kippeinrichtung 15 in Form einer kreisbogenförmigen Laufbahn 42 oder Gleitschiene auf der Vorderseite der Rotornabe 11 montiert. Hierbei verläuft im Inneren der Laufbahn 42 ein Aufhängeteil 43, z.B. eine Laufkatze oder dergleichen. Die Laufbahn 42 wird darüber hinaus, wie aus Fig. 4b (Draufsicht) ersichtlich ist, seitlich über Befestigungsarme 44, 45 zwischen den Rotorblättern 12 an der Rotornabe 11 fixiert.

Die Lauffläche 42 bzw. gekrümmte Gleitschiene ist mittels Befestigungsarmen 44, 45, 62, 63 an der Rotornabe 11 befestigt. Nach Gebrauch der Kippeinrichtung bzw. der Laufbahn 42 und dem Aufhängeteil 43 wird die Laufbahn 42 mitsamt der Befestigungsarme 44, 45, 62, 63 von der Rotornabe montiert, so dass anschließend an dem Rotor 10 im Bereich der Rotornabe 11 eine Nabenverkleidung 65 in Form eines so genannten Spinners an den Spinnerbefestigungsvorrichtungen 66, 67 befestigt wird. Ein Teil der Nabenverkleidung 65 ist in Fig. 4a teilweise dargestellt.

Nachdem die Kippeinrichtung mit der gekrümmten Laufbahn 42 an der Rotornabe befestigt ist, wird an einem Anschlagpunkt des Aufhängeteils, z.B. eine Laufkatze mit einem Antrieb, ein Hebemittel angeordnet.

Durch einen entsprechenden motorischen Antrieb für das Aufhängeteil 43 wird im angehobenen Zustand das Aufhängeteil 43 entlang beispielsweise eines Zahnkranzes oder dergleichen auf oder in der Laufbahn 42 bewegt, wodurch der gesamte Rotor 10 um eine Kippachse verkippt wird und in eine montagebereite Kippstellung gebracht wird. Anschließend wird der Rotor an eine Rotorwelle auf einer Gondel angesetzt und montiert.

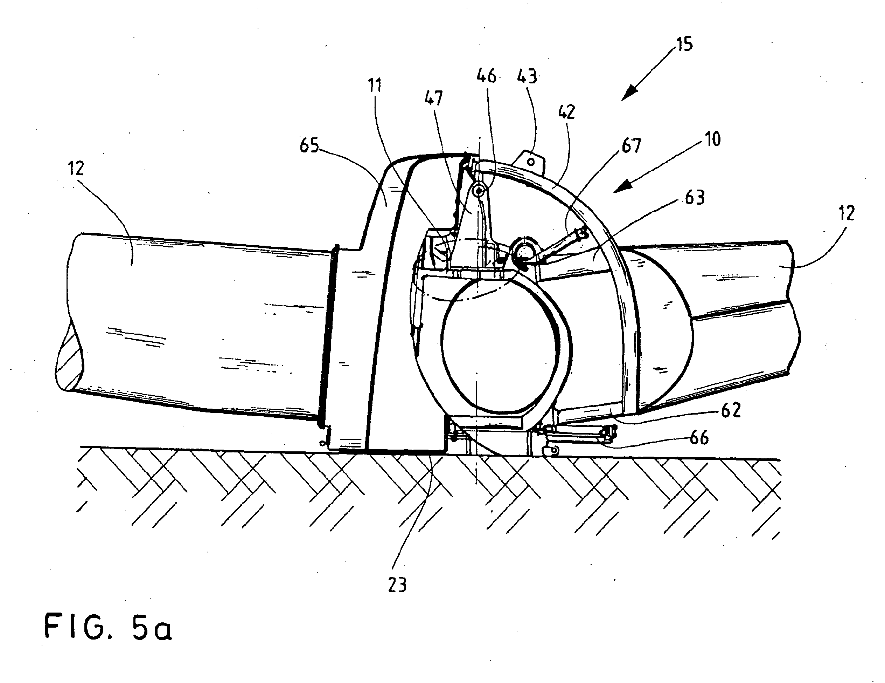

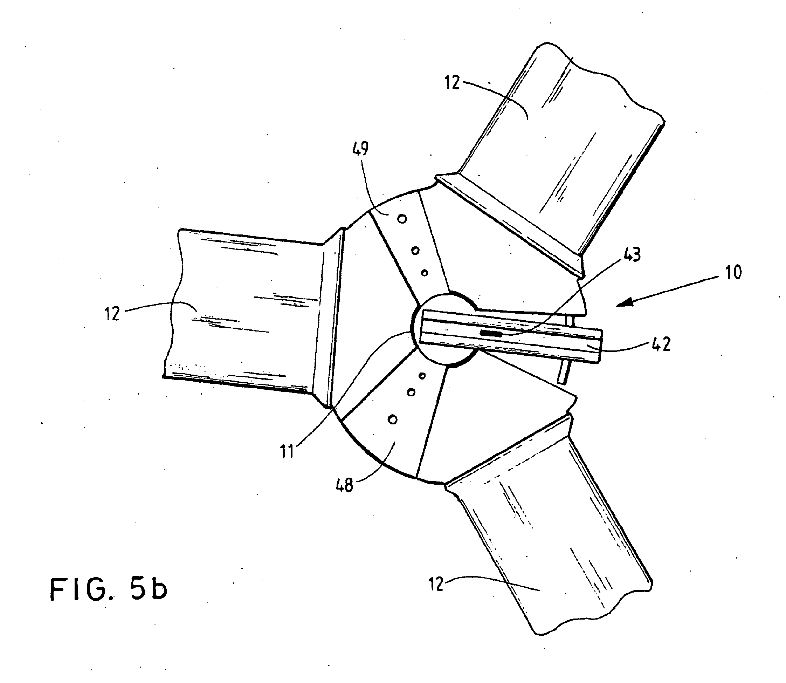

Fig. 5a und 5b zeigen, dass die kreisbogenförmige Laufbahn 42 mittels einer Bolzenverbindung 46 direkt mit der Rotornabe bzw. einem Verbindungsstück 47 der Rotornabe 11 verbunden wird. Um die Kippeinrichtung für den Kippvorgang zu stabilisieren, ist außerdem vorgesehen, dass die Laufbahn 42 mit Hilfe von unter der Nabenverkleidung 65 befindlichen, (nicht sichtbaren) Befestigungsarmen 44, 45 seitlich zwischen den anderen Rotorblättern 12 fixiert wird. Die Nabenverkleidung 65 kann so vor dem Anheben des Rotors weitgehend montiert sein, wobei bevorzugt die Befestigungsarme 44, 45 nach Anbringen der Kippeinrichtung 15 mit Verkleidungssegmenten 48, 49 abgedeckt werden.

Bei einem dreiblättrigen Rotor 10 erfolgt die Verkippung derart, dass insbesondere ein Rotorblatt nach unten gerichtet positioniert ist, während die beiden anderen Rotorblätter seitlich nach oben von der Rotornabe wegweisen. Der Rotor befindet sich dann in der so genannten Y-Stellung.

Bei dem in Fig. 5a gezeigten Ausführungsbeispiel ist die Laufbahn 42 bzw. Gleitschiene unmittelbar mit dem Verbindungsstück 47 verbunden, wodurch sich eine kleinbauende Anordnung einer Kippeinrichtung ergibt. Hierbei ist das Verbindungsstück 47 als Anschlagmittel für den Transport der Rotornabe 11 an dem Nabeneinstiegsflansch 68 der Rotornabe angebracht. Nach Montage bzw. Demontage des Rotors 10 wird die Laufbahn 42 sowie das Verbindungsstück 47 von der Rotornabe demontiert, wobei die Befestigungsarme 62, 63 an der Rotornabe verbleiben oder ebenfalls demontiert werden können. Anschließend wird nur das fehlende Verkleidungssegment 48, 49 der Nabenverkleidung 65 an den Spinnerbefestigungvorrichtungen 66, 67 montiert.

Bei dem in den Figuren 5a, 5b gezeigten Ausführungsbeispiel einer Kippeinrichtung ist die Kippeinrichtung innerhalb des Spinners mit der Rotornabe verbunden, während gemäß den in Fig. 4a, 4b gezeigten Ausführungsbeispielen die Kippeinrichtung außerhalb des Spinners angeordnet ist. Nach einer Montage des Rotors 10 an einem Turm bzw. einer Gondel, wobei der Wellenflansch mit der Rotorwelle verbunden wird, wird die Kippeinrichtung abmontiert, so dass die Nabenverkleidung 65 anschließend an den Befestigungsvorrichtungen 66, 67 befestigt wird.

Besonders bevorzugt sind die Befestigungsarme 44, 45, 62, 63 und die Befestigungsvorrichtungen 66, 67 ein und die selben Bauteile und verbleiben an der Rotornabe. Alternativ werden vorteilhaft die Befestigungsarme 44, 45, 62, 63 demontiert und die Befestigungsvorrichtungen 66, 67 werden an die gleichen Befestigungspunkte an der Rotornabe befestigt.

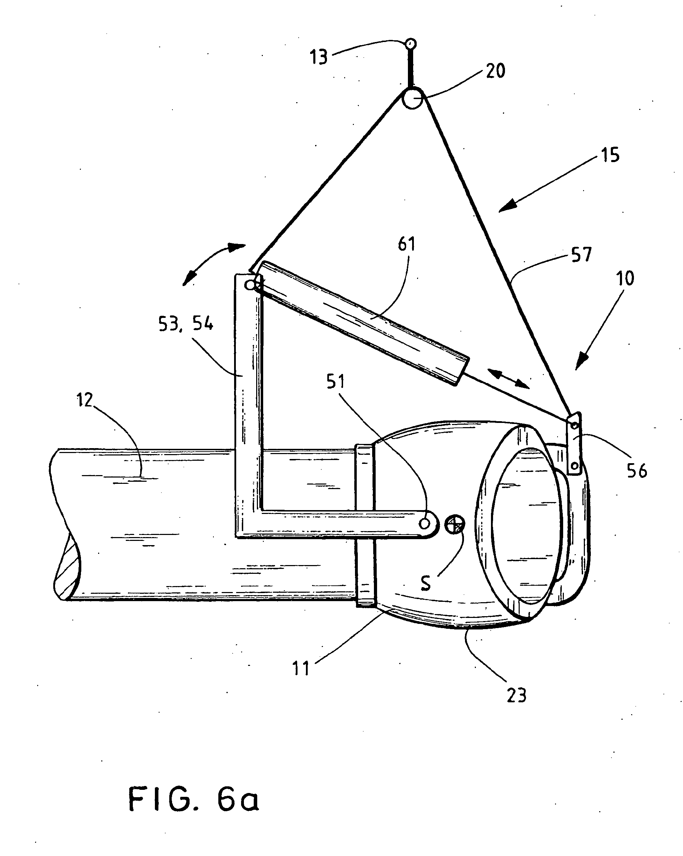

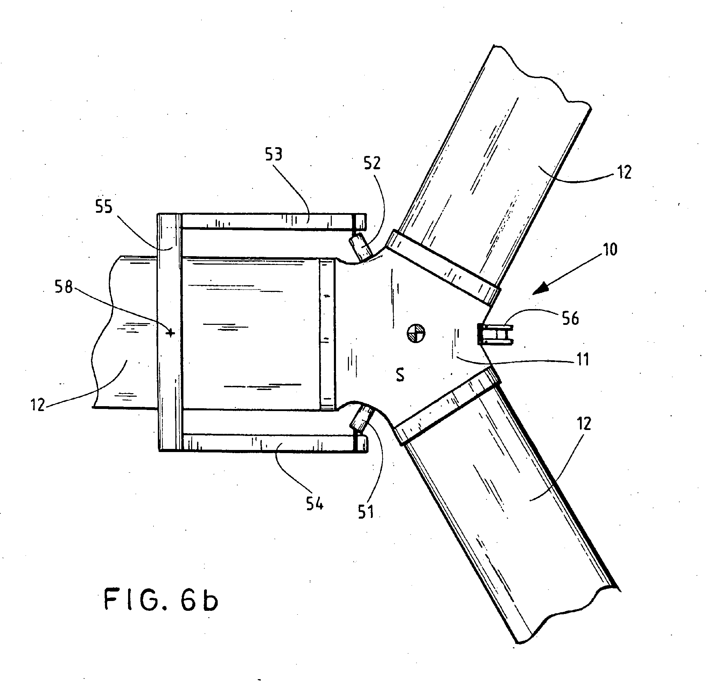

Fig. 6a zeigt schematisch eine Seitenansicht eines weiteren Ausführungsbeispiels einer erfindungsgemäßen Kippeinrichtung 15. In Fig. 6b ist eine Draufsicht auf den Rotor gezeigt.

Beidseitig von einem Rotorblatt 12 ist mittels Befestigungsmitteln 51, 52 je ein in der Seitenansicht L-förmiger Tragarm 53, 54 fixiert. Zwischen den Tragarmen 53, 54 ist eine entsprechende Traverse 55 angeordnet. Gegenüber von der Traverse 55 ist auf der freien Stelle zwischen den gegenüberliegenden Rotorblättern 12 ein beweglicher Hebelarm 56 angeordnet, der über ein Seil 57 mit dem gegenüberliegenden Befestigungs- und Mittelpunkt 58 der Traverse 55 verbunden ist. Hierbei wird das Seil 57 über eine Rolle 20 mit Anschlagpunkt 13 geführt, an der ein Hebemittel angeschlagen wird.

Darüber hinaus verfügt die Kippeinrichtung 15 zwischen der Traverse 55 des Trägers 53 und dem beweglichen Hebelarm 56 über einen schematisch eingezeichneten Hubzylinder 61, der in Fig. 6a im ausgefahrenen Zustand dargestellt ist. Aus Gründen der besseren Darstellbarkeit ist in Fig. 6b der Hubzylinder 61 nicht dargestellt.

Im waagerecht ausgerichteten Anfangszustand des Rotors 10 ist der Hubzylinder 61 ausgefahren, so dass nach dem Anheben des Rotors 10 mittels des Krans der Hubzylinder 61 eingefahren wird, wodurch die relative Lage des Rotors 10 um einen vorbestimmten Kippwinkel in Abhängigkeit der Stellung des (eingefahrenen) Hubzylinders verändert wird.

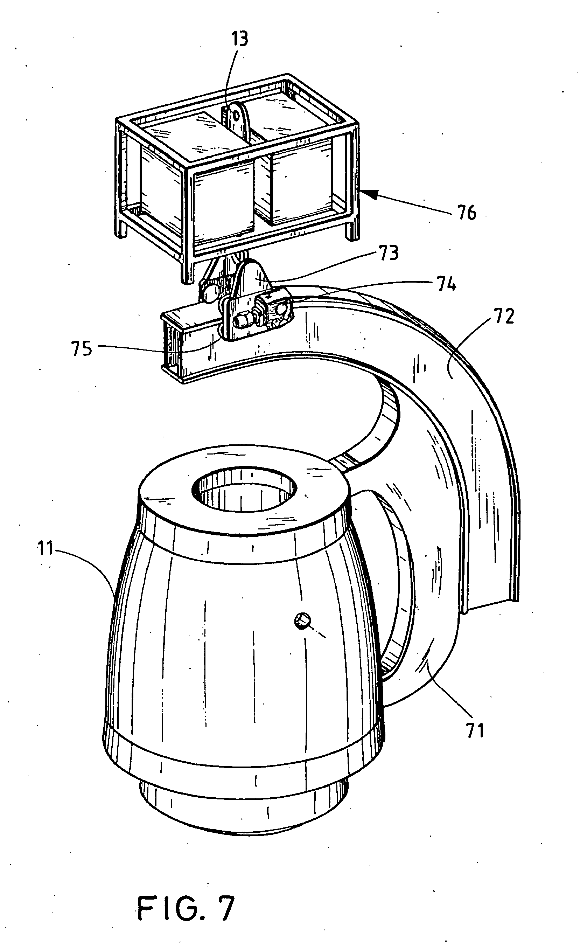

Fig. 7 zeigt schematisch eine perspektivische Darstellung einer schematisch angedeuteten Rotornabe 11 (unter Weglassung der Verbindungsflansche zu den Rotorblättern). An der Rotornabe 11 ist seitlich an der Vorderseite und an der Hinterseite ein Befestigungsbügel 71 angeordnet bzw. befestigt, auf den eine kreisförmige Rollbahn 72 bzw. eine kreisbogenförmige Traverse aufgesetzt ist.

Am oberen Ende der Rollbahn 72 ist eine Laufkatze 73 angeordnet, wobei die Laufkatze 73 mit einem Anschlagpunkt 13 eines Hebemittels einer Hebeeinrichtung, z.B. eines Krans, verbunden ist. Unter dem Anschlagpunkt 13 befindet sich ein Energiespeicher bzw. Antriebsaggregat 76, welches in Form eines Verbrennungsmotors mit Generator zur Stromerzeugung oder mit Hydraulikaggregat oder auch in Form von Akkumulatoren ausgeführt sein kann.

Die Laufkatze 73 verfügt über einen Antrieb 74, so dass Rollen 75 der Laufkatze 74 angetrieben werden. Die Rollen 75 greifen in einen Zahnkranz oder Bolzenkranz oder eine Rollenkette auf der Rollbahn 74 ein, so dass die Rotornabe 11 bzw. ein Rotor mit der Rotornabe 11 entlang der kreisförmigen Rollbahn 72 um den Schwerpunkt herum in eine Montageposition geschwenkt wird. Hierbei wird die Kippbewegung der Rotornabe 11 durch den Antrieb 74 ausgeführt, wobei während der Kippbewegung die Rollbahn 72 in Bezug auf den ortsfesten Antrieb bzw. den Anschlagpunkt 13 bewegt wird.

### Bezugszeichenliste

- 10: Rotor
- 11: Rotornabe
- 12: Rotorblatt
- 13: Anschlagpunkt
- 14: Haken
- 15: Kippeinrichtung
- 16: Befestigungsadapter
- 17: Bolzen
- 18: Hebelarm
- 19: Hydraulikzylinder
- 20: Rolle
- 21: Schäkel
- 22: Seil
- 23: Rückseite
- 24: Seil
- 25: Hebearm
- 26: Seil
- 27: Verstellelement
- 28: Arm
- 31: Bauteil
- 32: Anschluss
- 33: Anschluss
- 34: Arm
- 35: Zahnkranzsegment
- 36: Antriebsritzel
- 37: Anschlussteil
- 38: Anschlag
- 39: Anschlag
- 41: Rolle
- 42: Laufbahn
- 43: Aufhängeteil
- 44: Befestigungsarm
- 45: Befestigungsarm
- 46: Bolzenverbindung
- 47: Verbindungsstück
- 48: Verkleidungssegment
- 49: Verkleidungssegment
- 51: Befestigungsmittel
- 52: Befestigungsmittel
- 53: Träger
- 54: Tragarm
- 55: Traverse
- 56: Hebelarm
- 57: Seil
- 58: Mittelpunkt
- 61: Hubzylinder
- 62: Befestigungsarm
- 63: Befestigungsarm
- 65: Nabenverkleidung
- 66: Befestigungsvorrichtung
- 67: Befestigungsvorrichtung
- 71: Befestigungsbügel
- 72: Rollbahn
- 73: Laufkatze
- 74: Antrieb
- 75: Rolle
- 76: Energiespeicher / Antriebsaggregat
- S: Schwerpunkt
- R: Radius

## Patentansprüche

1. Verfahren zum Handhaben einer Rotornabe (11) einer Windenergieanlage oder zum Handhaben eines Rotors (10) einer Windenergieanlage mittels einer Hebeeinrichtung, wobei die Rotornabe (11) oder der Rotor (10) mittels der Hebeeinrichtung angehoben oder gehalten wird, **dadurch gekennzeichnet dass**, die Rotornabe (11) im angehobenen Zustand mittels einer an der Rotornabe (11) angreifenden Kippeinrichtung (15), wobei die Kippeinrichtung (15) zwischen einem Hebemittel der Hebeeinrichtung und der Rotornabe (11) angeordnet wird, aus der ursprünglichen angehobenen Lage um einen vorbestimmten Kippwinkel gekippt wird oder der Rotor (10) mittels einer an der den Rotorblattwurzeln der Rotorblätter des Rotors (10) angreifenden Kippeinrichtung (15), wobei die Kippeinrichtung (15) zwischen einem Hebemittel der Hebeeinrichtung und dem Rotor (10) angeordnet wird, aus der ursprünglichen angehobenen Lage um einen vorbestimmten Kippwinkel gekippt wird, wobei Führungsseile vorgesehen sind, um den Rotor (10) oder die Rotornabe (11) auszurichten und wobei die Führungsseile keine Verkippung des Rotors (10) oder der Rotornabe (11) bewirken.

2. Verfahren nach Anspruch 1, **dadurch gekennzeichnet, dass** die Kippeinrichtung (15) zur Einleitung des Kippvorgangs aktiviert oder geschaltet wird.

3. Verfahren nach Anspruch 1 oder 2, **dadurch gekennzeichnet, dass** die Rotornabe (11) oder der Rotor (10) am Turm oder an einer Gondel des Turms angebracht werden oder vom Turm oder von der Gondel demontiert werden, wobei vor dem Anheben der Rotornabe (11) die Kippeinrichtung (15) mit der Rotornabe (11) verbunden wird oder vor dem Anheben des Rotors (10) die Kippeinrichtung (15) mit dem Rotor (10) verbunden wird.

4. Verfahren nach einem der Ansprüche 1 bis 3, **dadurch gekennzeichnet, dass** nach dem Anheben die gekippte Rotornabe (11) mit ihrer Montageseite oder der gekippte Rotor (10) mit seiner Montageseite an eine Rotornabenmontageseite des Turms oder an eine auf dem Turm angeordneten Gondel angesetzt wird.

5. Verfahren nach einem der Ansprüche 1 bis 3, **dadurch gekennzeichnet, dass** die Rotornabe (11) oder der Rotor (10) unter Verwendung eines Krans als Hebeeinrichtung angehoben wird.

6. Einrichtung (15) zur Handhabung einer Rotornabe (11) einer Windenergieanlage oder zur Handhabung eines Rotors (10) einer Windenergieanlage, **dadurch gekennzeichnet dass**, die Einrichtung als Kippeinrichtung (15) ausgebildet ist, die Kippeinrichtung (15) Befestigungsmittel aufweist mit denen die Kippeinrichtung (15) an der Rotornabe (11) und/oder an den Rotorblattwurzeln der an der Rotornabe (11) angeordneten Rotorblättern des Rotors (10) befestigt wird oder ist, wobei die Kippeinrichtung (15) einen Anschlagpunkt (13) für ein Hebemittel aufweist, wobei im angehobenen Zustand der Rotornabe (11) am Hebemittel beim Verkippen der Rotornabe (11) mittels der am Hebemittel angeordneten Kippeinrichtung (15) die Position der Rotornabe (11) verändert wird oder im angehobenen Zustand des Rotors (11) am Hebemittel beim Verkippen des Rotors (10) mittels der am Hebemittel angeordneten Kippeinrichtung (15) die Position der Rotornabe (11) verändert wird, wobei Führungsseile vorgesehen sind, um den Rotor (10) oder die Rotornabe (11) auszurichten und wobei die Führungsseile keine Verkippung des Rotors (10) oder der Rotornabe (11) bewirken.

7. Einrichtung (15) nach Anspruch 6, **dadurch gekennzeichnet, dass** der Abstand des Anschlagpunktes (13) zum Schwerpunkt (S) der Rotornabe (11) beim Verkippen der Rotornabe (11) oder der Abstand des Anschlagpunktes (13) zum Schwerpunkt (S) des Rotors (10) beim Verkippen des Rotors (10) im Wesentlichen konstant bleibt oder der Abstand des Anschlagpunktes (13) zum Schwerpunkt (S) der Rotornabe (11) beim Verkippen der Rotornabe (11) oder der Abstand des Anschlagpunktes (13) zum Schwerpunkt (S) des Rotors (10) beim Verkippen des Rotors (10) verändert wird.

8. Einrichtung (15) nach Anspruch 6 oder 7, **dadurch gekennzeichnet, dass** das Befestigungsmittel als Rahmen oder als Gestell oder als Befestigungsbügel oder als Adapter ausgebildet ist, wobei am Befestigungsmittel der Kippeinrichtung (15) ein Tragbügel oder ein Hebearm oder ein Schwenkbügel oder Schwenkgestell oder eine Führungsschiene angeordnet oder vorgesehen sind.

9. Einrichtung (15) nach einem der Ansprüche 6 bis 8, **dadurch gekennzeichnet, dass** die Kippeinrichtung (15) einen Antrieb (74) und/oder einen Aktor (19, 61) aufweist.

10. Einrichtung (15) nach Anspruch 9, **dadurch gekennzeichnet, dass** der Aktor als Hubzylinder (19, 61) oder als Seilwinde (27) oder als Seilzug oder als rotatorischer Antrieb ausgebildet ist.

11. Einrichtung (15) nach Anspruch 9, **dadurch gekennzeichnet, dass** der Antrieb (74) im Eingriff mit der Führungsschiene ist.

12. Einrichtung (15) nach einem der Ansprüche 8 bis 11, **dadurch gekennzeichnet, dass** die Führungsschiene mit einem Zahnkranz oder mit einem Bolzenkranz oder einer Rollenkette ausgebildet ist.

13. Einrichtung (15) nach einem der Ansprüche 9 bis 12, **dadurch gekennzeichnet, dass** der Antrieb am Hebemittel der Hebeeinrichtung oder am Anschlagpunkt oder an der Führungsschiene angeordnet ist oder wird.

14. Verwendung einer Kippeinrichtung (15) zur Errichtung oder Demontage einer Windenergieanlage, wobei die Kippeinrichtung (15) nach einem der Ansprüche 6 bis 13 ausgebildet ist.

## Claims

1. A method of handling a rotor hub (11) of a wind turbine or for handling a rotor (10) of a wind turbine by means of a lifting device, wherein the rotor hub (11) or the rotor (10) is raised or held by means of the lifting device, **characterised in that**, in the raised state, the rotor hub (11) is tilted by means of a tilting device (15) engaging the rotor hub (11), wherein the tilting device (15) is arranged between a lifting means of the lifting device and the rotor hub (11), out of the original raised position through a predetermined tilting angle or the rotor (10) is tilted out of the original raised position through a predetermined tilting angle by means of a tilting device (15) engaging the rotor blade roots of the rotor blades of the rotor (10), wherein the tilting device (15) is arranged between a lifting means of the lifting device and the rotor (10), wherein guide ropes are provided in order to align the rotor (10) or the rotor hub (11) and wherein the guide ropes cause no tilting of the rotor (10) or of the rotor hub (11).

2. A method as claimed in claim 1, **characterised in that** the tilting device (15) is activated or switched in order to initiate the tilting process.

3. A method as claimed in claim 1 or 2, **characterised in that** the rotor hub (11) or the rotor (10) is attached to the tower or to a housing of the tower or is demounted from the tower or from the housing, wherein before the lifting of the rotor hub (11) the titling device (15) is connected to the rotor hub (11) or before the lifting of the rotor (10) the tilting device (15) is connected to the rotor.

4. A method as claimed in one of claims 1 to 3, **characterised in that** after the lifting process, the mounting side of the tilted rotor hub (11) or the mounting of the tilted rotor (10) is located on a rotor hub mounting side of the tower or on a housing arranged on the tower.

5. A method as claimed in one of claims 1 to 3, **characterised in that** the rotor hub (11) or the rotor (10) is lifted using a crane as the lifting device.

6. A device (15) for handling a rotor hub (11) of a wind turbine or for handling a rotor (10) of a wind turbine, **characterised in that** the device is constructed as a tilting device (15), the tilting device (15) has fastening means, with which the tilting device (15) is fastened to the rotor hub (11) and/or to the rotor blade roots of the rotor blades, arranged on the rotor hub (11), of the rotor (10), wherein the tilting device (15) has an engagement point (13) for a lifting means, wherein, in the raised state of the rotor hub (11) on the lifting means, when tilting the rotor hub (11) by means of the tilting device (15) arranged on the lifting means, the position of the rotor hub (11) is altered or in the raised state of the rotor on the lifting means, when tilting the rotor (10) by means of the tilting device (15) arranged on the lifting means, the position of the rotor hub (11) is altered, wherein guide ropes are provided in order to align the rotor (10) or the rotor hub (11) and wherein the guide ropes cause no tilting of the rotor (10) or of the rotor hub (11).

7. A device (15) as claimed in claim 6, **characterised in that** the spacing of the engagement point (13) from the centre of gravity (S) of the rotor hub (11) when tilting the rotor hub (11) or the spacing of the engagement point (13) from the centre of gravity (S) of the rotor (10) when tilting the rotor (10) remains substantially constant or the spacing of the engagement point (13) from the centre of gravity (S) of the rotor hub (11) when tilting the rotor hub (11) or the spacing of the engagement point (13) from the centre of gravity (S) of the rotor (10) is altered when tilting the rotor (10).

8. A device (15) as claimed in claim 6 or 7, **characterised in that** the fastening means is in the form of a frame or stand or fastening bracket or adapter, wherein arranged or provided on the fastening means of the tilting device (15) there is a support bracket, a lifting arm, a pivotal bracket or pivotal frame or a guide rail.

9. A device (15) as claimed in one of claims 6 to 8, **characterised in that** the tilting device (15) has a drive mechanism (74) and/or an actuator (19, 61).

10. A device (15) as claimed in claim 9, **characterised in that** the actuator is in the form of a lifting cylinder (19, 61) or a rope winch (27) or a rope pull or a rotary drive mechanism.

11. A device (15) as claimed in claim 9, **characterised in that** the drive mechanism (74) is in engagement with the guide rail.

12. A device (15) as claimed in one of claims 8 to 11, **characterised in that** the guide rail is constructed with a ring gear or with a ring of pegs or a roller chain.

13. A device (15) as claimed in one of claims 9 to 12, **characterised in that** the drive mechanism is arranged on the lifting means of the lifting device or on the engagement point or on the guide rail.

14. Use of a tilting device (15) to install or demount a wind turbine, wherein the tilting device (15) is constructed in accordance with one of claims 6 to 13.

## Revendications

1. Procédé de manipulation d'un moyeu de rotor (11) d'une éolienne, ou pour la manipulation d'un rotor (10) d'une éolienne au moyen d'un dispositif de levage, dans lequel le moyeu de rotor (11) ou le rotor (10) est soulevé ou maintenu par l'intermédiaire du dispositif de levage, **caractérisé en ce que** le moyeu de rotor (11), lorsqu'il est soulevé, au moyen d'une prise sur le moyeu de rotor (11), forme un dispositif de basculement (15), le dispositif de basculement (15) étant disposé entre un moyen de levage du dispositif de levage et le moyeu de rotor (11) et étant incliné à partir de la position relevée initiale selon un angle d'inclinaison prédéterminé, ou le rotor (10), au moyen d'une pale de rotor à la racine des pales de rotor du rotor (10), forme un dispositif de basculement (15), le dispositif de basculement (15) étant disposé entre un moyen de levage du dispositif de levage et le rotor (10) et étant incliné à partir de la position relevée initiale selon un angle prédéterminé d'inclinaison, des câbles de guidage étant prévus pour aligner le rotor (10) ou le moyeu de rotor (11) et les câbles de guidage ne provoquant pas de basculement du rotor (10) ou du moyeu de rotor (11).

2. Procédé selon la revendication 1, **caractérisé en ce que** le dispositif de basculement (15) est activé ou est commuté au moment du basculement.

3. Procédé selon la revendication 1 ou 2, **caractérisé en ce que** le moyeu de rotor (11) ou le rotor (10) est monté sur la tour ou sur une nacelle de la tour ou est retiré de la tour ou de la nacelle, et **en ce que**, avant le soulèvement du moyeu de rotor (11), le dispositif de basculement (15) est relié au moyeu de rotor (11) ou avant le soulèvement du rotor (10), le dispositif de basculement (15) est relié au rotor (10).

4. Procédé selon l'une des revendications 1 à 3, **caractérisé en ce qu'**après avoir décroché le moyeu de rotor incliné (11) avec son côté de montage ou le rotor incliné (10) avec son côté de montage, le moyeu ou le rotor est fixé à un ensemble de moyeu de rotor de la tour ou est fixé à une nacelle disposée sur la tour.

5. Procédé selon l'une des revendications 1 à 3, **caractérisé en ce que** le moyeu de rotor (11) ou le rotor (10) est soulevé par une grue constituant un dispositif de levage.

6. Moyen (15) conçu pour la manipulation d'un moyeu de rotor (11) d'une installation éolienne ou pour la manipulation d'un rotor (10) d'une installation éolienne, **caractérisé en ce que** le dispositif est conçu comme un dispositif de basculement (15), le dispositif de basculement (15) comportant des moyens de fixation, avec lequel le dispositif de basculement (15) du moyeu de rotor (11) et / ou le moyeu de rotor (11) sont fixés sur les pieds de pales, les pales de rotor étant disposées sur le rotor (10), le dispositif d'inclinaison (15) comportant un point de fixation (13) pour un moyen de levage, dans lequel, dans la position relevée du moyeu de rotor (11) sur les moyens de levage, la position du moyeu de rotor (11) est modifiée pendant l'inclinaison du moyeu de rotor (11) par l'intermédiaire du moyen de levage disposé au niveau du dispositif de basculement (15) ou dans la position relevée du rotor (11) sur le moyen de levage, la position du moyeu de rotor (11) est modifiée pendant le basculement du rotor (10) par l'intermédiaire du moyen de levage disposé au niveau du dispositif de basculement (15), lesdits câbles de guidage étant prévus autour du rotor (10) ou l'aligner le moyeu de rotor (11) et lesdits câbles de guidage ne provoquant pas de basculement du rotor (10) ou du moyeu de rotor (11).

7. Moyen (15) selon la revendication 6, **caractérisé en ce que** la distance entre le point de fixation (13) et le centre de gravité (S) du moyeu de rotor (11) pendant l'inclinaison du moyeu de rotor (11) ou la distance entre le point de fixation (13) et le centre de gravité (S) de rotor (10) reste sensiblement constante pendant le basculement du rotor (10) ou la distance entre le point de fixation (13) et le centre de gravité (S) du moyeu de rotor (11) pendant l'inclinaison du moyeu de rotor (11), ou la distance entre le point d'ancrage (13) et le centre de gravité (S) du rotor (10) lors du basculement du rotor (10) est altérée.

8. Moyen (15) selon la revendication 6 ou 7, **caractérisé en ce que** les moyens de fixation sont conçus comme un cadre ou un châssis ou un support de fixation ou un adaptateur, dans lequel les moyens de fixation du dispositif de basculement (15) comprennent un support de fixation ou un bras de levage ou un support pivotant ou un châssis pivotant ou des rails de guidage.

9. Moyen (15) selon l'une quelconque des revendications 6 à 8, **caractérisé en ce que** le dispositif de basculement (15) comporte un dispositif d'entraînement (74) et / ou un actionneur (19, 61).

10. Moyen (15) selon la revendication 9, **caractérisé en ce que** le dispositif d'actionnement d'un vérin de levage (19, 61) est réalisé sous la forme d'un treuil à câble (27) ou comme une corde ou en comme un disque rotatif.

11. Moyen (15) selon la revendication 9, **caractérisé en ce que** le dispositif d'entraînement (74) est en prise avec le rail de guidage.

12. Moyen (15) selon l'une quelconque des revendications 8 à 11, **caractérisé en ce que** le rail de guidage est formé avec une couronne dentée ou un anneau avec un boulon ou avec une chaîne à rouleaux.

13. Moyen (15) selon l'une quelconque des revendications 9 à 12, **caractérisé en ce que** le dispositif d'entraînement est disposé sur les moyens de levage du dispositif de levage ou sur un point de fixation ou sur le rail de guidage.

14. Utilisation d'un dispositif de basculement (15) pour la mise en place ou le démontage d'une éolienne, dans lequel le dispositif de basculement (15) est conçu selon l'une des revendications 6 à 13.
